**Europäisches Patentamt**

**European Patent Office**

**Office européen des brevets**

(19)

(11) Veröffentlichungsnummer: **0 127 734**
**B1**

(12) **EUROPÄISCHE PATENTSCHRIFT**

(45) Veröffentlichungstag der Patentschrift:
27.01.88

(21) Anmeldenummer: 84102922.6

(22) Anmeldetag: 16.03.84

(51) Int. Cl.⁴: **A 63 C 17/22, F 16 C 23/10**

(54) Laufrollenträger mit hintereinander und parallel zueinander angeordneten Laufrollenachsen.

(30) Priorität: 25.04.83 CH 2210/83

(43) Veröffentlichungstag der Anmeldung:
12.12.84 Patentblatt 84/50

(45) Bekanntmachung des Hinweises auf die Patenterteilung:
27.01.88 Patentblatt 88/4

(84) Benannte Vertragsstaaten:
AT BE CH DE FR GB IT LI LU NL SE

(56) Entgegenhaltungen:
FR - A - 788 245
FR - A - 2 050 936
FR - A - 2 407 010
US - A - 3 504 952

(73) Patentinhaber: Schütz, Ernst, Adlikerstrasse 79,
CH-8105 Regensdorf (CH)

(72) Erfinder: Schütz, Ernst, Adlikerstrasse 79,
CH-8105 Regensdorf (CH)

(74) Vertreter: Troesch, Hans Alfred, Dr. Ing. et al,
Walchestrasse 19, CH-8035 Zürich (CH)

ACTORUM AG

**Beschreibung**

Die vorliegende Erfindung betrifft einen Laufrollenträger mit Bohrungen zur Aufnahme von quer zur Längsrichtung des Trägers verlaufenden und in Längsrichtung des Trägers hintereinander und parallel zueinander angeordneten Laufrollenachsen, wobei der Träger zum auswechselbaren Schraub-Verbinden mit dem Schuhteil eines Rollschuhes vorgesehen ist und die Höhenlage einer Laufrollenachse gegenüber dem Träger geändert werden kann.

Rollschuhe haben schon vor mehr als hundert Jahren bestanden, wie beispielsweise die US-A-108 184 aus dem Jahre 1870 zeigt. Sie wurden ständig verbessert oder zumindest neu konzipiert, wobei die beiden Fahrwerke je durch eine Einzel-, eine Doppel- oder eine Trippelrolle ausgerüstet waren. Es ist auch ein Rollschuh bekannt geworden, bei welchem, anstelle einer vorderen und einer hinteren zylinderförmigen, gegebenenfalls bombierten Rolle, je eine Kugel Anwendung findet (US-A-4 076 263).

Im Maschinenbau ist ein Rollenblock bekannt geworden, dessen Höhe mit Hilfe von in Bohrungen des Blockes drehbar angeordneten Lagerhülsen zur Aufnahme der Rollenachsen vorgesehen ist. Diese Lagerhülsen haben exzentrische Bohrungen für die Wellen der Rollen, derart, dass durch Drehen der Hülsen im anzupassenden Block die Höhe des Radumfanges bezüglich dieses Blockes verändert werden kann. Nach Einstellung der geforderten Blockhöhe können die Lagerhülsen mittels Madenschrauben fixiert werden, zu welchem Zweck sie in entsprechende Nuten am Umfang der Lagerhülsen eingepresst werden. (US-A-3 504 952)

Eine sehr gute Darstellung des Standes der Technik ist dem Buch «Roller Skate» von Alain-Yves Beaujour, erschienen in deutscher Sprache im Benteli-Verlag, Bern, zu entnehmen. Dort sind auch verschiedene Rollschuhkonstruktionen beschrieben und insbesondere auf den Seiten 80 und 81 Rollschlittschuhe mit mehreren, z.B. 5, hintereinander angeordneten Rollen ersichtlich.

Aus diesem Buch geht auch hervor, dass ein Rollschuh nur optimal sein kann, wenn er der Person und dem Verwendungszweck individuell angepasst werden kann und wenn er gegebenenfalls auf die Tatsache, dass entsprechende Schlittschuhe schon vorhanden sind, Rücksicht nehmen kann.

In diesem Sinne ist es schon 1935 (CH-A-179 789) bekannt geworden, einen Schlittschuh mit Hilfe einer Laufrollen tragenden, U-förmigen Querschnitt aufweisenden Halteschiene in einen Rollschuh zu verwandeln.

Es ist ferner bekannt (DE-A-2 942 969) einen Rollschuh zu schaffen, bei welchem mindestens eine der Laufrollen bezüglich ihrem Abstand von der Standfläche einstellbar ist. Diese Verstellmöglichkeit der Rollen bezüglich ihrer Höhe ist jedoch kompliziert, so dass nicht nur der Rollschuh verteuert wird, sondern das jeweils optimale, oft kurzfristige Umstellen und Fixieren der Rolle in der neuen Lage für den Benützer Probleme stellt. Dabei ist, wie aus dieser Vorveröffentlichung hervorgeht, entweder die Verstellung nur in konkreten Schritten möglich, was an und für sich nachteilig ist, oder aber eine stufenlose Verstellbarkeit durch eine Schiebebewegung in einem Längsschlitz vorgesehen, was ebenfalls ein ganz genaues Einstellen und Fixieren der zu verstellenden Rolle in dieser Lage erschwert. Diese offenbarten Verstellmöglichkeiten sind unpraktisch, so dass der Rollschuhläufer davon absehen wird, Feineinstellungen, die den Rollschuh erst optimal zur Geltung bringen, im Zeitraum des Benützens vorzunehmen.

Die vorliegende Erfindung bezweckt die Schaffung eines Rollschuhfahrgestells, welches das Höhenverstellen jeder einzelnen Rolle auf einfache und sichere Weise ermöglicht.

Ein derartiger Laufrollenträger zeichnet sich dadurch aus, dass er auch zum auswechselbaren Schraub-Verbinden mit der Laufschiene eines Schlittschuhes geeignet ist, dass auf den Laufrollenachsen jeweils Laufrollenpaare angeordnet sind und dass die Laufrollenachsen als Exzenterwellen in der Weise ausgebildet sind, dass die Exzenterwelle eines Laufrollenpaares mit beidseits von einem Lagerwellenmittelteil seitlich abstehenden Rollenachsen für die Lagerung der Rollen versehen ist, wobei die gemeinsame Rollendrehachse zur Drehachse des Lagerwellenmittelteils exzentrisch verläuft und durch Verdrehen des Lagerwellenmittelteiles um dessen Drehachse die Höhenlage der Rollendrehachse bezüglich des Laufrollenträgers geändert werden kann.

Die Erfindung wird anschliessend beispielsweise anhand einer Figur erläutert. Es zeigen:

Fig. 1 eine Seitenansicht eines Schlittschuhs mit an dessen Laufschiene abnehmbar befestigtem Rollenträger,

Fig. 2 eine Vorderansicht, teilweise im Schnitt des Unterteils des Schlittschuhs mit montiertem Rollenträger,

Fig. 3 eine Seitenansicht des Rollschuh-Rollenträgers, ohne Rollen,

Fig. 4 Achse und Achsschenkel sowie Rollen und Befestigungselemente in Ansicht, teilweise geschnitten und in auseinandergezogener Darstellung.

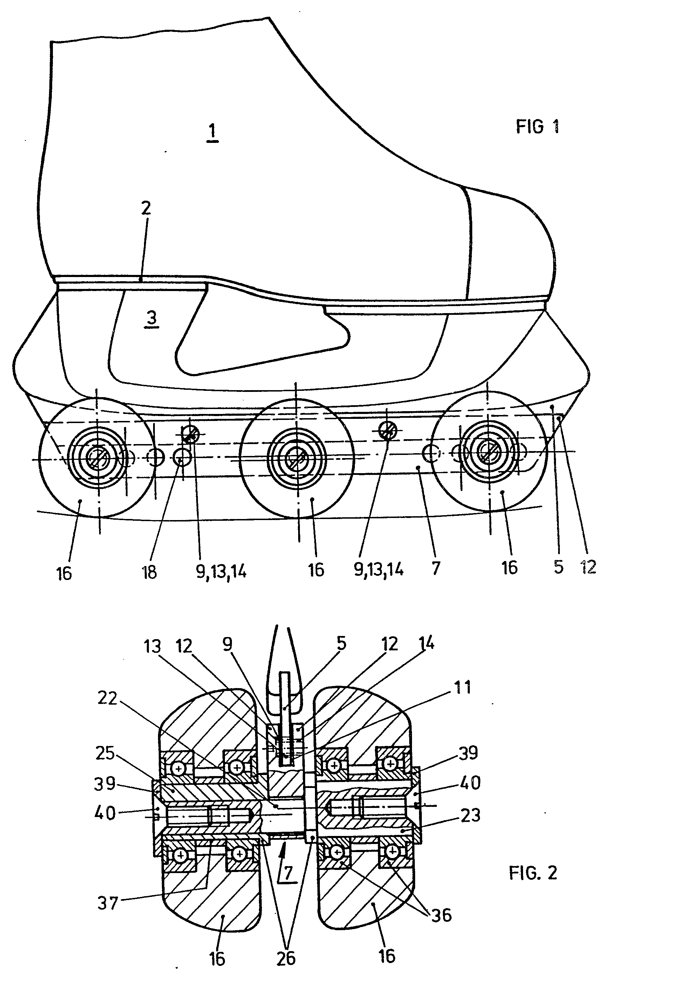

In den Fig. 1–4 ist ein Schlittschuh-Stiefel 1 mit einer Sohle 2 dargestellt, an welcher ein Schlittschuh-Oberbau 3 mittels Nieten befestigt ist. Im Schlittschuh-Oberbau 3 wird eine Laufschiene 5 eines normalen Schlittschuhs festgehalten, welche der Aufnahme eines Rollschuh-Laufrollenträgers 7 in anschliessend erläuterter Weise dient. Es ist grundsätzlich auch möglich, den Schlittschuh-Stiefel 1, als Rollschuh-Stiefel bezeichnet, mit einem ähnlichen, beispielsweise aus Kunststoff gespritztem Rolllschuh-Oberbau zu versehen und direkt daran einen Rollschuh-Laufrollenträger 7 zu befestigen. In diesem Fall handelt es sich um reine Rollschuhe, während die in den Fig. 1–4 dargestellte Ausführung eine Verwendung von Schlittschuhen zu Rollschuhen durch Anbringen eines Rollschuh-Laufrollenträgers auf die Laufschienen ermöglicht.

Zum Befestigen des Rollschuh-Laufrollenträgers 7 an der Laufschiene 5 ist diese mit zwei Bohrungen 9 versehen. Der Laufrollenträger 7 weist im Oberteil eine Nut auf, welche zwei Flanken 12 festlegt. Der Träger 7 wird über die Laufschiene 5 gestülpt, so dass diese in die Nut 11 zu liegen kommt. Dabei kommen zwei Durchgänge 13 für eine Schraube und je eine Gewindebohrung 14 in den beiden Flanken in Übereinstimmung mit den Bohrungen 9 der Laufschiene 5 zu liegen, so dass der Träger 7 durch die Schrauben mit der Laufschiene 5 verbunden werden kann. Dadurch wird es auch möglich, unterschiedliche Laufrollenträger mit unterschiedlichen Rollen an ein und derselben Laufschiene 5 zu befestigen.

Die dargestellte Ausführung hat drei Laufrollenpaare 16, welche längs des Trägers 7 verteilt sind. Der Träger 7 ist mit Bohrungen 18 versehen, welche eine vordere Gruppe 19 und eine hintere Gruppe 20 festlegen sowie mit einer einzelnen Bohrung 18 ungefähr in der Mitte. Es ist natürlich möglich, durch Anbringen weiterer Gruppen von Bohrungen 18, die Lage der Laufrollenpaare 16 und deren Zahl bezüglich des Rollenträgers 7 zu verändern.

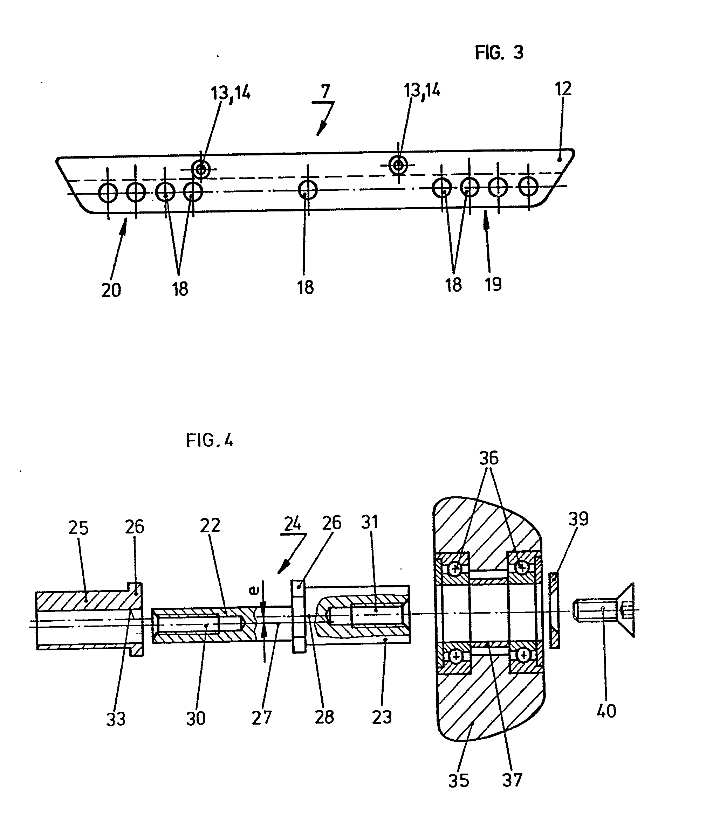

Zum Durchstecken und Befestigen in den Bohrungen 18 sind Lagerwellenmittelteile 22 und mit diesen einteilig verbundene Rollenachsen 23 zu Gebilden 24 vereinigt vorgesehen. Dabei entsprechen die Durchmesser der Lagerwellenmittelteile 22 den Durchmessern der Bohrungen 18. Der Lagerwellenmittelteil 22 ist derart lang, dass er nach dem Durchstecken durch den Rollenträger 7 bei angeschlagener Rollenachse 23 auf der anderen Seite genügend vorsteht, so dass eine aufsteckbare Rollenachse 25 auf diesen Teil des Lagerwellenmittelteiles 22 geschoben werden kann. Auf der dem Rollenträger 7 zugekehrten Seite der Rollenachsen 23 und 25 ist zwecks Halterung beim Fixieren der Rollen je ein Sechskant 26 vorgesehen. In Fig. 4 sind die Drehachse 27 des Lagerwellenmittelteiles 22 und die Rollendrehachse 28 ersichtlich, welche eine gegenseitige Exzentrizität «e» aufweisen. Dies erlaubt es, die Höhenlage der Rollendrehachse 28 und damit der Rollen 35 bezüglich des Rollenträgers 7 einzeln zu verändern.

Es ist natürlich auch möglich, die Rollenachse 23 lösbar mit dem Mittelteil 22 zu verbinden.

Das Gebilde 24 weist an seinen beiden Enden je eine Gewindebohrung 30 und 31 auf, deren gegenseitige Exzentrizität ebenfalls «e» beträgt. Die Bohrung 33 der aufsteckbaren Rollenachse 25 ist bezüglich deren Mittellinie ebenfalls im gleichen Masse exzentrisch. Die beiden Rollenachsen 23 und 25 können einzelnen mit der bzw. auf dem Lagerwellenmittelteil 22 gedreht werden. Dies ermöglicht es, jede einzelne Rolle der Rollenpaare 16 bezüglich Höhe individuell zu verstellen. Die Einzelrollen 35 sind je mit zwei geschlossenen Kugellagern 36 versehen, welche durch eine Trennhülse 37 voneinander getrennt sind. Dies gestattet ein besseres Aufnehmen von Schlägen bei Sprüngen u.dgl. Zum Befestigen der Rollen 35 sind beidseits je eine Unterlagscheibe 39 sowie eine Schraube 40 vorgesehen.

Nicht dargestellt ist eine vordere bzw. hintere Bremsrolle, wie diese zum Stande der Technik gehören, jedoch zur vorliegenden Erfindung grundsätzlich nichts beitragen.

Es ist hervorzuheben, dass durch die Befestigungskonstruktion der Einzelrollen 35, gemäss Fig. 4, d.h. durch das Anbringen der beiden Gewindebohrungen 30 und 31 in ein und demselben Gebilde 24 nicht nur das Befestigen der einen Einzelrolle 35 auf der Rollenachse ermöglicht wird, sondern durch die zweite Schraube in der Gewindebohrung 30 sowohl die Aufsteck-Rollenachse 25 als auch die auf ihm gelagerte Rolle 35 festgehalten werden und zusätzlich die beiden Teile 22, 23 bzw. 25 mit den beiden Einzelrollen 35 mit dem Rollenträger 7 bezüglich achsialer Verschiebung formverbunden und bezüglich Drehung kraftverbunden sind. Diese einfache Konstruktion erlaubt eine sehr einfache Herstellung, eine leichte Einstellmöglichkeit und ein leichtes Auswechseln von Rollen, sei es im Rollenträger 7, sei es im Wechsel gegen andere Rollen oder durch Auswechslung des ganzen Rollenträgers. Auch ist es möglich, je nach Einstellen der gegenseitigen Höhenlage der Rollenpaare 16, einen derartigen Rollschuh entweder für Kunstlauf oder für Schnellauf auszubilden.

## Patentansprüche

1. Laufrollenträger (7) mit Bohrungen (18) zur Aufnahme von quer zur Längsrichtung des Trägers (7) verlaufenden und in Längsrichtung des Trägers (7) hintereinander und parallel zueinander angeordneten Laufrollenachsen (22, 23, 25), wobei der Träger (7) zum auswechselbaren Schraub-Verbinden mit dem Schuhteil eines Rollschuhes vorgesehen ist und die Höhenlage einer Laufrollenachse gegenüber dem Träger (7) geändert werden kann, dadurch gekennzeichnet, dass der Träger (7) auch zum auswechselbaren Schraub-Verbinden mit der Laufschiene (5) eines Schlittschuhes geeignet ist, dass auf den Laufrollenachsen (22, 23, 25) jeweils Laufrollenpaare (16, 16; 35, 35) angeordnet sind und dass die Laufrollenachsen (22, 23, 25) als Exzenterwellen in der Weise ausgebildet sind, dass die Exzenterwelle (22, 23, 25) eines Laufrollenpaares (16, 16; 35, 35) mit beidseits von einem Lagerwellenmittelteil (22) seitlich abstehenden Rollenachsen (23, 25) für die Lagerung der Rollen (16, 16; 35, 35) versehen ist, wobei die gemeinsame Rollendrehachse (28) zur Drehachse (27) des Lagerwellenmittelteiles (22) exzentrisch (e) verläuft und durch Verdrehen des Lagerwellenmittelteiles (22) um dessen Drehachse (27) die Höhenlage der Rollendrehachse (28) bezüglich des Laufrollenträgers (7) geändert werden kann.

2. Laufrollenträger nach Anspruch 1, dadurch gekennzeichnet, dass der Lagerwellenmittelteil (22) mit der einen Rollenachse (23) fest und mit der anderen (25) lose verbunden ist.

3. Laufrollenträger nach Anspruch 1 oder 2, dadurch gekennzeichnet, dass die Rollen (16) paarweise auf ihren Rollenachsen (23, 25) drehbar und lösbar befestigt sind, wobei im befestigten Zustand der Rollen (16) die Rollenachsen (23, 25) gegen Drehung bezüglich des Laufrollenträgers (7) gesichert sind.

4. Laufrollenträger nach einem der Ansprüche 2 oder 3, dadurch gekennzeichnet, dass die eine Rollenachse (25) auf dem Lagerwellenmittelteil (22) aufsteckbar und die andere (23) mit dem Lagerwellenmittelteil (22) einteilig ist.

## Claims

1. Roller carrier (7) with holes (18) for receiving roller axles (22, 23, 25) extending transversely to the longitudinal direction of the carrier (7) and disposed parallel to each other and in sequence in that direction, wherein the carrier (7) is adapted for dismountable screwed connection to the foot portion of a roller skate, and the height of a roller axis relative to the carrier (7) can be altered, characterised in that the carrier (7) is also suitable for dismountable screwed connection with the blade (5) of a skating boot, in that pairs of rollers (16, 16; 35, 35) are mounted on the roller axles (22, 23, 25), in that the roller axles (22, 23, 25) are formed as eccentric shafts, in that the eccentric shaft (22, 23, 25) for a pair of rollers (16, 16; 35, 35) is provided on both sides with axles (23, 23) projecting laterally from a central support shaft portion (22) to support the rollers (16, 16; 35, 35), wherein the common roller rotation axis (28) is eccentrically disposed (e) in relation t the rotation axis (27) of the central support shaft portion (22), and on rotation of the central support shaft portion (22) about its rotation axis (27) the height of the roller rotation axis (28) relative to the roller carrier (7) can be altered.

2. Roller carrier as in Claim 1, characterised in that the central support shaft portion (22) is fixedly connected to one roller axle (23) and loosely connected to the other roller axle (25).

3. Roller carrier as in Claim 1 or 2, characterised in that the rollers (16) are rotatably and releasably affixed in pairs on their roller axles (23, 25), wherein in affixed condition of the rollers (16), the roller axles (23, 25) are secured against rotation relative to the roller carrier (7).

4. Roller carrier as in either of Claims 2 or 3, characterised in that one roller axle (25) can be applied to the central support shaft portion (22), and the other axle (23) is integral with the central support shaft portion (22).

## Revendications

1.Châssis de patin à roulettes (7) comportant des perçages (18) destinés à recevoir des axes de roulettes (22, 23, 25) qui s'étendent transversalement à la direction longitudinale du châssis (7) et sont disposés les uns derrière les autres et parallèlement les uns aux autres dans le sens de la longueur du châssis (7), ce châssis (7) étant destiné à être assemblé par boulons, d'une manière interchangeable, avec la partie formant chaussure d'un patin à roulettes et la position en hauteur d'un axe de roulettes par rapport au châssis (7) pouvant être modifiée, caractérisé en ce qu'il est également adapté pour être assemblé par boulons, d'une manière interchangeable, avec la glissière (5) d'un patin à glace, en ce que des paires de roulettes (16, 16; 35, 35) sont respectivement montées sur les axes de roulettes (22, 23, 25) et en ce que les axes de roulettes (22, 23, 25) sont conçus sous la forme d'arbres d'excentrique (22, 23, 25) de sorte que l'arbre d'excentrique (22, 23, 25) d'une paire de roulettes (16, 16; 35, 35) est pourvu, de part et d'autre d'une partie médiane formant arbre à paliers (22), d'axes de roulettes (23, 25) espacés latéralement, destinés au montage des roulettes (16, 16; 35, 35), l'ensemble de l'axe de rotation de roulettes (28) s'étendant d'une manière excentrique (e) par rapport à l'axe de rotation (27) de la partie médiane formant arbre à paliers (22) et la position en hauteur de l'axe de rotation de roulettes (28) vis-à-vis du châssis de patin à roulettes (7) pouvant être modifiée par une torsion de la partie médiane formant arbre à paliers (22) autour de son axe de rotation (27).

2. Châssis de patin à roulettes selon la revendication 1, caractérisé en ce que la partie médiane formant arbre à paliers (22) est accouplée d'une manière fixe à l'un (23) des axes de roulettes et d'une manière amovible avec l'autre (25).

3. Châssis de patin à roulettes selon la revendication 1 ou 2, caractérisé en ce que les roulettes (16) sont fixées par paires, d'une manière mobile en rotation et détachable, sur leurs axes de roulettes (23, 25) les axes de roulettes (23, 25) étant, à l'état de fixation des roulettes (16), retenus à l'encontre d'un mouvement de rotation vis-à-vis du châssis de patin à roulettes (7).

4. Châssis de patin à roulettes selon la revendication 2 ou 3, caractérisé en ce que l'un (25) des axes de roulettes est emboîtable sur la partie médiane formant arbre à paliers (22) tandis' que l'autre (23) est solidaire de celle-ci.

FIG 1

FIG. 2

0 127 734

FIG. 3

13,14    7    13,14    12

20    18    18    18    19

FIG. 4

25  26    22    24  26  31    36    39

33    30    27    28    23    35    37    40

7